# EUROPEAN PATENT APPLICATION

(11) **EP 4 667 315 A1**
(43) Date of publication of application: **24.12.2025**
(21) Application number: 23922371.2
(22) Date of filing: 03.11.2023
(51) Int. Cl.: B60W 50/02, B60W 60/00, B60W 50/035

(54) **STEERING DETECTION METHOD AND APPARATUS FOR AUTONOMOUS DRIVING VEHICLE, DEVICE, AND MEDIUM**

(30) Priority: 17.02.2023 CN 202310129802
(71) Applicant: Shanghai Westwell Technology Co., Ltd., Shanghai 200050 (CN)
(72) Inventor: TAN, Limin, Shanghai 200050 (CN); LIU, Jichuan, Shanghai 200050 (CN); XIE, Yi, Shanghai 200050 (CN); CHEN, Chao, Shanghai 200050 (CN)
(74) Representative: De Vries & Metman
(86) International application number: PCT/CN2023/129512
(87) International publication number: WO 2024/169255

(57) **Abstract**

The present invention relates to the technical field of autonomous driving. Provided are a steering detection method and apparatus for an autonomous driving vehicle, a device, and a medium. The steering detection method comprises: acquiring a steering response time delay of an autonomous driving vehicle; according to the steering response time delay, periodically acquiring a steering instruction parameter and a corresponding actual steering parameter of the autonomous driving vehicle; according to the actual steering parameter of each period, determining whether the autonomous driving vehicle performs steering in the corresponding period; and according to the steering instruction parameter and the actual steering parameter of each period in which steering is not performed, determining whether the autonomous driving vehicle has a steering fault in the corresponding period. The steering detection solution of the present invention can effectively and accurately detect various steering faults of autonomous driving vehicles, achieving real-time and online steering-state monitoring during driving processes of autonomous driving vehicles, and making the monitoring stable and correct. The detection method is simple and easy to implement.

## Description

### TECHNICAL FIELD

The present disclosure relates to the technical field of autonomous driving, and specifically to a steering detection method and an apparatus for an autonomous vehicle, a device and a medium.

### BACKGROUND

For autonomous vehicles, executing corresponding operations according to commands are crucial. In particular, whether an autonomous vehicle accurately performs steering operations based on steering commands directly affects the driving safety of the autonomous vehicle.

Take an autonomous vehicle equipped with a wire-controlled chassis as an example. At present, the wire-controlled chassis itself has adopted quite a few redundancy measures, but these measures can only identify issues related to the components of the wire-controlled chassis itself and can only detect direct faults of the chassis.

However, during the driving process of an autonomous vehicle, in addition to direct chassis faults, the following steering failures may also occur: (1) The steering oil passage is blocked, resulting in the signal feedback indicating that power has been supplied, but the steering cannot be actually executed; (2) One side of the wheels runs into a groove, causing steering jamming and making it impossible to execute the autonomous driving steering command; (3) Mechanical parts such as the steering shaft are broken, causing the situation where although the steering is executed, the wheels cannot be actually pushed to steer.

If the above steering failures cannot be identified in a timely manner, catastrophic consequences for the autonomous vehicle will be caused. At present, however, there is no effective method capable of detecting various steering failures.

It should be noted that the information disclosed in the above background is only used to facilitate the understanding of the background of the present disclosure, and thus may include information that does not constitute the prior art known to those skilled in the art.

### SUMMARY

In view of this, the present disclosure provides a steering detection method and apparatus for an autonomous vehicle, a device and a medium, which can efficiently and accurately detect various steering failures of autonomous vehicles, realize online real-time monitoring of steering status during the driving process of the autonomous vehicle, ensure stable monitoring without false detection, and the detection method is simple and easy to implement.

One aspect of the present disclosure provides a steering detection method is provided, including: acquiring steering response time delay of an autonomous vehicle; periodically acquiring steering command parameter and corresponding actual steering parameter of the autonomous vehicle according to the steering response time delay; according to the actual steering parameter of each period, determining whether the autonomous vehicle performs steering in a corresponding period; according to the steering command parameter and the actual steering parameter of each period in which steering is not performed, determining whether a steering failure has occurred in the autonomous vehicle during a corresponding period.

In some embodiments, the actual steering parameter includes an actual steering angle; the step of determining whether the autonomous vehicle performs steering in a corresponding period includes: determining whether per-unit variation in the actual steering angle is less than a preset threshold based on the actual steering parameter of a current period; if yes, determining that the steering of the autonomous vehicle is not performed during the current period.

In some embodiments, the steering command parameter includes a steering command angle, and the actual steering parameter includes an actual steering angle; the step of determining whether a steering failure has occurred in the autonomous vehicle during a corresponding period includes: determining whether an angle difference between each pair of the steering command angle and the actual steering angle is greater than an angle threshold based on the steering command parameter and the actual steering parameter of a current period in which steering is not performed; if yes, determining that a steering failure has occurred in the autonomous vehicle in the current period in which steering is not performed.

In some embodiments, in each pair of the steering command angle and the actual steering angle, a time difference between a timestamp of the actual steering angle and a timestamp of the steering command angle corresponds to the steering response delay.

In some embodiments, the step of periodically acquiring steering command parameter and corresponding actual steering parameter of the autonomous vehicle includes: determining a duration of a detection window, wherein the duration of the detection window is greater than the steering response delay; periodically acquiring the steering command parameter and the actual steering parameter of the autonomous vehicle based on the duration of the detection window.

In some embodiments, before the step of periodically acquiring steering command parameter and corresponding actual steering parameter of the autonomous vehicle, the method further includes: determining a sampling period for the steering command parameter and the actual steering parameter according to an update period of the steering command parameter of the autonomous vehicle; wherein a sampling period is greater than the update period and less than the steering response delay.

In some embodiments, after the step of periodically acquiring steering command parameter and corresponding actual steering parameter of the autonomous vehicle, the method further includes: storing the steering command parameter and the actual steering parameter of one period acquired currently in a buffer; the step of determining whether the autonomous vehicle performs steering during a corresponding period is performed based on the steering command parameter and the actual steering parameter of the corresponding period acquired from the buffer.

In some embodiments, a capacity of the buffer corresponds to a data volume of the steering command parameter and the actual steering parameter of one period.

In some embodiments, before the step of determining whether the autonomous vehicle performs steering during the corresponding period, the method further includes: determining that the autonomous vehicle has entered an autonomous driving mode and that target parameter of the autonomous vehicle satisfy a steering detection trigger condition; wherein the steering detection trigger condition is determined according to a configuration of a steering system of the autonomous vehicle.

In some embodiments, the step of acquiring steering response time delay of an autonomous vehicle includes: performing a response test on the autonomous vehicle under an autonomous driving condition to acquire time-dependent variation relationship between the steering command parameter and the actual steering parameter of the autonomous vehicle; determining the steering response delay of the autonomous vehicle according to the variation relationship.

In some embodiments, after the step of determining whether a steering failure has occurred in the autonomous vehicle during a corresponding period, the method further includes: when a steering failure occurs in the autonomous vehicle during a period, generating a steering failure detection result and reporting the result to an autonomous driving module of the autonomous vehicle, so that the autonomous driving module adjusts a driving state of the autonomous vehicle according to the steering failure detection result.

Another aspect of the present disclosure provides a steering detection apparatus for an autonomous vehicle applied to the steering detection method for an autonomous vehicle , wherein the apparatus includes: a response delay acquisition module configured to acquire steering response delay of the autonomous vehicle; a steering parameter acquisition module configured to periodically acquire steering command parameter and corresponding actual steering parameter of the autonomous vehicle according to the steering response delay; a steering detection module configured to determine whether the autonomous vehicle performs steering in a corresponding period according to the actual steering parameter of each period; a steering failure detection module configured to determine whether a steering failure has occurred in the autonomous vehicle during a corresponding period according to the steering command parameter and the actual steering parameter of each period in which steering is not performed.

Another aspect of the present disclosure provides an electronic device including: a processor; a memory configured to store a computer program, wherein the steering detection method for an autonomous vehicle according to any of the above embodiments is performed when the computer program is executed by the processor.

Another aspect of the present disclosure provides a computer storage medium configured to store a computer program, wherein the steering detection method for an autonomous vehicle according to any of the above embodiments is performed when the computer program is executed by a processor.

The beneficial effects of the present disclosure compared with the prior art include at least the following:
The steering detection solution of the present disclosure can accurately acquire the steering command parameter and corresponding actual steering parameter for each period based on the steering response delay of the autonomous vehicle. By analyzing the actual steering parameter of each period, whether the vehicle performs steering during the corresponding period can be easily determined. Furthermore, according to the steering command parameter and the actual steering parameter of each period in which the steering is not performed, whether a steering failure has occurred during a corresponding period can be determined.

By adopting the steering detection solution of the present disclosure, various steering failures of the autonomous vehicle can be detected efficiently and accurately. Online real-time monitoring of the steering status during the driving process of the autonomous vehicle is realized, ensuring stable monitoring without false detection. Moreover, the detection method is simple and easy to implement.

It should be understood that the above general description and the following detailed description are merely exemplary and explanatory, and should not limit the present disclosure.

### BRIEF DESCRIPTION OF THE DRAWINGS

The accompanying drawings herein are incorporated into and constitute a part of this specification, illustrate embodiments consistent with the present disclosure, and together with the specification serve to explain the principles of the present disclosure. Obviously, the drawings described below are only some embodiments of the present disclosure, and those skilled in the art can also acquire other drawings based on these drawings without exerting creative efforts.
FIG. 1 is a schematic diagram of the steps of a steering detection method for an autonomous vehicle according to an embodiment of the present disclosure;
FIG. 2 is a schematic diagram of the steps of determining whether the autonomous vehicle performs a steering in a corresponding period according to an embodiment of the present disclosure;
FIG. 3 is a schematic diagram of the steps of determining whether a steering failure has occurred in the autonomous vehicle in a corresponding period according to an embodiment of the present disclosure;
FIG. 4 is a schematic flow diagram of a steering detection method for an autonomous vehicle according to an embodiment of the present disclosure;
FIG. 5 is a block diagram of a steering detection apparatus for an autonomous vehicle according to an embodiment of the present disclosure;
FIG. 6 is a structural schematic diagram of an electronic device according to an embodiment of the present disclosure.

### DETAILED DESCRIPTION

Example implementations will now be described more fully with reference to the accompanying drawings. However, example implementations can be embodied in various forms and should not be construed as being limited to the implementations set forth herein. On the contrary, these implementations are provided to make the present disclosure comprehensive and complete, and to fully convey the concept of example implementations to those skilled in the art.

The accompanying drawings are merely schematic illustrations of the present disclosure and are not necessarily drawn to scale. The same reference numerals in the drawings refer to the same or similar parts, and thus repeated descriptions thereof will be omitted. Some block diagrams shown in the drawings are functional entities and do not necessarily correspond to physically or logically independent entities. These functional entities can be implemented in the form of software, or in one or more hardware modules or integrated circuits, or in different networks and/or processor devices and/or microcontroller devices.

In addition, the processes shown in the drawings are merely illustrative and do not necessarily include all steps. For example, some steps can be decomposed, some steps can be combined or partially combined, and the actual execution order may be changed according to actual conditions. The words "first", "second" and similar terms used in the specific description do not denote any order, quantity or importance, but are only used to distinguish different components. It should be noted that, without conflict, the embodiments of the present disclosure and the features in different embodiments can be combined with each other.

The steering detection solution of the present disclosure is applicable to various types of autonomous vehicles, especially those equipped with a steer-by-wire system.

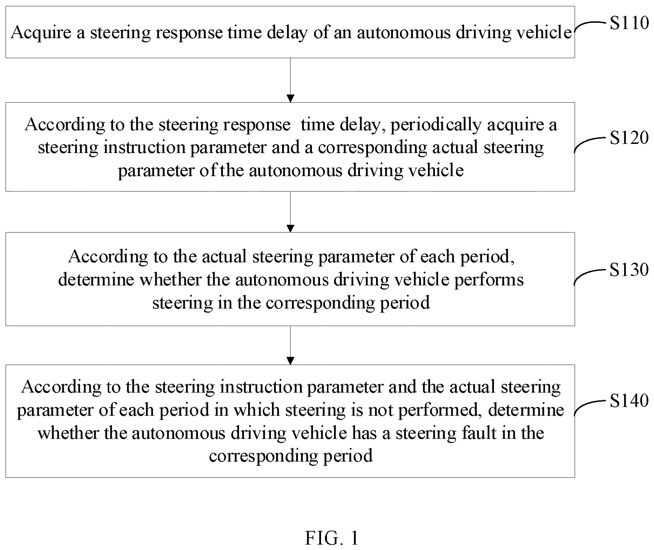

FIG. 1 shows the main steps of a steering detection method for an autonomous vehicle according to an embodiment. As shown in FIG. 1, the steering detection method for an autonomous vehicle in this embodiment includes the following steps.

Step S110: acquire steering response delay of the autonomous vehicle.

The steering response delay refers to the delay time from when the autonomous driving module of the autonomous vehicle issues a steering command to when the steering system of the autonomous vehicle responds to the steering command and executes the relevant steering operation. Based on the steering response delay, it is convenient to accurately acquire the steering command parameter and the actual steering parameter corresponding to each steering command in the subsequent steps.

Step S120: periodically acquire steering command parameter and corresponding actual steering parameter of the autonomous vehicle according to the steering response delay.

The autonomous driving module of the autonomous vehicle has a set command update period; correspondingly, the operation of acquiring the steering command parameter and the corresponding actual steering parameter of the autonomous vehicle is also executed periodically, so as to achieve accurate detection while reducing the amount of redundant data and saving detection consumption.

In addition, the data volume of the steering command parameter and the corresponding actual steering parameter acquired each time is determined according to the steering response delay, so as to ensure that the steering command parameter (a steering command may include multiple steering command parameters) and the actual steering parameter corresponding to a steering command are acquired accurately and appropriately, and improve the detection efficiency of whether the autonomous vehicle performs steering or has a steering failure in each period in the subsequent steps.

Step S130: according to the actual steering parameter of each period, determine whether the autonomous vehicle performs steering in a corresponding period.

According to the variation between the actual steering parameter in a period, whether the autonomous vehicle performs steering in that period can be easily determined.

Step S140: according to the steering command parameter and the actual steering parameter of each period in which steering is not performed, determine whether a steering failure has occurred in the autonomous vehicle in a corresponding period.

For the period in which steering is not performed, according to the difference between the steering command parameter and the actual steering parameter in that period, whether a steering failure has occurred in the autonomous vehicle in that period can be easily determined.

By adopting the above-mentioned steering detection solution, various steering failures of the autonomous vehicle can be detected efficiently and accurately, realizing online real-time monitoring of the steering state during the driving process of the autonomous vehicle, ensuring stable monitoring without false detection, and the detection method is simple and easy to implement.

In one embodiment, the step of acquiring steering response delay of the autonomous vehicle includes: performing a response test on the autonomous vehicle under an autonomous driving condition to acquire time-dependent variation relationship between the steering command parameter and the actual steering parameter of the autonomous vehicle; determining the steering response delay of the autonomous vehicle according to the variantion relationship.

The response test can specifically be a step response test. By drawing curves of the steering command angle and the actual steering angle changing with time, the steering response delay of the autonomous vehicle is determined as a steady-state difference value to guide the setting of subsequent detection windows.

In one embodiment, the step of periodically acquiring steering command parameter and corresponding actual steering parameter of the autonomous vehicle includes: determining the duration of a detection window, wherein a duration of the detection window is greater than the steering response delay; periodically acquiring the steering command parameter and the actual steering parameter of the autonomous vehicle based on the duration of the detection window.

The duration of the detection window being greater than the steering response delay can ensure that the actual steering parameter acquired in each period corresponds to the steering command parameter. Moreover, the duration of the detection window is slightly greater than the steering response delay to ensure that the steering command parameter and the actual steering parameter corresponding to one steering command are acquired in each period.

In a specific implementation situation, the steering response delay of the autonomous vehicle is about 400ms, so the duration of the detection window is slightly greater than the steering response delay, which can be set to about 500ms. When acquiring the steering command parameter and the actual steering parameter of a period, the steering command parameter and the actual steering parameter whose timestamps match the timestamps of the current detection window can be acquired according to the timestamps of the current detection window (for example, t1-t500), that is, the steering command parameter and the actual steering parameter within the time period t1-t500 are acquired.

In one embodiment, before the step of periodically acquiring steering command parameter and corresponding actual steering parameter of the autonomous vehicle, the method further includes: determining the sampling period of the steering command parameter and the actual steering parameter according to an update period of the steering command parameter of the autonomous vehicle; wherein the sampling period is greater than the update period and less than the steering response delay.

The sampling period being greater than the update period can ensure that the data acquired each time includes the steering command parameter corresponding to a steering command; and the sampling period being less than the steering response delay can avoid that the steering command parameter and the actual steering parameter acquired at one time correspond to more than one steering commands, which affects the subsequent detection of whether steering is performed or whether a steering failure has occurred.

In a specific implementation scenario, the update period of the steering command parameter of the autonomous vehicle is 20ms; the sampling period of the steering command parameter and the actual steering parameter can be set to 2-5 times the update period, for example, 100ms. Then, the steering command parameter and the actual steering parameter within the duration of the detection window are acquired every 100ms.

In an embodiment, after periodically acquiring the steering command parameter and corresponding actual steering parameter of the autonomous vehicle, the method further includes: storing the currently acquired steering command parameter and the actual steering parameter of a period in a buffer; the step of determining whether the autonomous vehicle performs steering during a corresponding period is performed based on the steering command parameter and the actual steering parameter of the corresponding period acquired from the buffer.

In the embodiment, the capacity of the buffer corresponds to the data volume of the steering command parameter and the actual steering parameter in one period. That is, the buffer stores data of one period each time; when data of the next period needs to be stored, the existing data in the buffer can be discarded first to ensure that the storage of the steering command parameter and the actual steering parameter do not occupy excessive memory space. The mentioned memory space, depending on the device executing the steering detection method, refers to the memory space of the device for executing the steering detection method. The device for executing the steering detection method may be the autonomous driving module of the autonomous vehicle, an electronic unit integrated into the autonomous driving module, or an electronic unit communicating with the autonomous driving module, and so on.

In one embodiment, before the step of determining whether the autonomous vehicle performs steering during the corresponding period, the method further includes: determining that the autonomous vehicle has entered an autonomous driving mode and that target parameter of the autonomous vehicle satisfy a steering detection trigger condition; wherein the steering detection trigger condition is determined according to a configuration of a steering system of the autonomous vehicle.

The steering detection trigger condition is determined according to the configuration of the steering system of the autonomous vehicle. For example, if the steering system of an autonomous vehicle is configured such that the automatic steering is not allowed when the vehicle speed is 0, the corresponding steering detection trigger condition is set to "vehicle speed greater than 0", and the target parameter is "vehicle speed". Thus, when the autonomous vehicle enters the autonomous driving mode and the vehicle speed is greater than 0, the steering detection logic of the present disclosure is triggered to perform steering detection on the autonomous vehicle. For another example, the steering system of an autonomous vehicle is configured with a chassis fault level requirement (for example, steering detection is performed when xxx fault occurs in the wire-controlled chassis, and the failure level of the xxx failure is higher than that of shaft jamming). Then, the corresponding detection trigger condition is set to "xxx fault occurs in the wire-controlled chassis", and the corresponding target parameter is xxx parameter of the wire-controlled chassis. Therefore, when the autonomous vehicle enters the autonomous driving mode and xxx failure occurs in the wire-controlled chassis, the steering detection logic of the present disclosure is triggered to perform steering detection on the autonomous vehicle.

In an embodiment, the actual steering parameter includes the actual steering angle; whether the autonomous vehicle performs steering in the corresponding period can be determined according to the per-unit variation in the actual steering angle in the period.

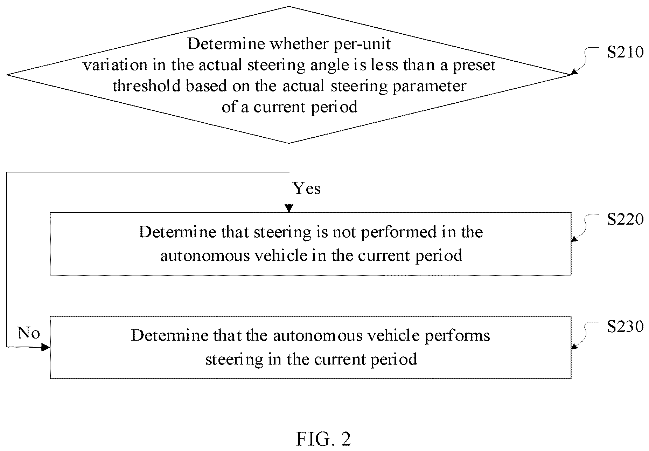

Specifically, as shown in FIG. 2, determining whether the autonomous vehicle has steered in the corresponding period includes the following steps.

Step S210: determine whether per-unit variation in the actual steering angle is less than a preset threshold based on the actual steering parameter of a current period.

Step S220: if yes, determine that steering is not performed in the autonomous vehicle in the current period.

Step S230: if not, determine that the autonomous vehicle performs steering in the current period.

In the current period, if the per-unit variation in the actual steering angle is less than the preset threshold, it can be determined that the autonomous vehicle does not perform steering. For periods determined to have no steering, subsequent detection of whether a steering failure has occurred is continued to identify situations where the autonomous vehicle issued a steering command but did not actually steer due to a steering failure. For periods determined to have steering, it indicates that the autonomous vehicle's steering function is normal, and no subsequent judgment is made.

The specific calculation method of the per-unit variation can be configured as needed.

For example, in one embodiment, the per-unit variation can be configured as the angular velocity change per second; correspondingly, the preset threshold is configured as an angular velocity threshold (such as 1°/s). Thus, in this embodiment, if the difference between the maximum value and the minimum value of the actual steering angle is less than 1° per second in the current period, it can be determined that the autonomous vehicle does not perform steering.

In another embodiment, the per-unit variation can be configured as the angle change between every two actual steering angles; correspondingly, the preset threshold is configured as an angle threshold (the setting of the angle threshold is related to the detection period. Corresponding to the above-mentioned angular velocity threshold of 1°/s, the detection period in this embodiment is 100ms, that is, the time interval between every two adjacent actual steering angles is 0.1s, so the angle threshold can be set to 0.1 ° ). Therefore, in this embodiment, if the difference between every two actual steering angles in the current period is less than 0.1°, it can be determined that the autonomous vehicle does not perform steering.

In other embodiments, the specific value of the preset threshold can be set according to the degree of strictness of the autonomous driving scenario, and is not limited to the above listed 1°/s and 0.1°.

In an embodiment, the steering command parameter includes a steering command angle, and the actual steering parameter includes an actual steering angle; whether a steering failure has occurred in the autonomous vehicle during the corresponding period can be determined according to the angle difference between the actual steering angle and the steering command angle in that period.

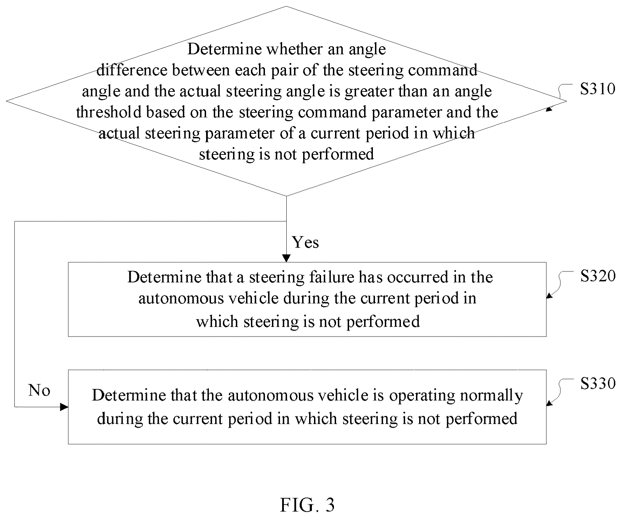

Specifically, as shown in FIG. 3, the step of determining whether a steering failure has occurred in the autonomous vehicle during a corresponding period includes the following steps.
Step S310: determine whether an angle difference between each pair of the steering command angle and the actual steering angle is greater than an angle threshold based on the steering command parameter and the actual steering parameter of a current period in which steering is not performed;
Step S320:if yes, determine that a steering failure has occurred in the autonomous vehicle during the current period in which steering is not performed;
Step S330: if no, determine that the autonomous vehicle is operating normally during the current period in which steering is not performed.

Wherein, in each pair of the steering command angle and the actual steering angle, a time difference between the timestamp of the actual steering angle and the timestamp of the steering command angle corresponds to the steering response delay.

For a current period in which steering is not performed, a difference between the actual steering angle and the corresponding steering command angle is tracked and calculated. If the angle difference between each pair of steering command angle and actual steering angle is greater than the set angle threshold, it indicates that the autonomous vehicle issues a steering command during this period but does not actually steer successfully (this situation of issuing a steering command but failing to steer can also be called "shaft jamming"), so it is determined that a steering failure has occurred in the autonomous vehicle during this period.

By tracking and calculating continuous difference within a period, i.e., determining that a steering failure has occurred when the angle difference between each pair of the steering command angle and the actual steering angle is greater than the angle threshold, interference from data noise on detection accuracy can be avoided, enabling accurate detection of vehicle steering failures.

**In** addition, the angle threshold can also be set according to the degree of strictness of the autonomous driving scenario. For example, in an embodiment, the angle threshold can be set to 2°; thus, in the corresponding period, if the angle difference between each pair of the steering command angle and the actual steering angle is greater than 2°, it can be determined that a steering failure has occurred in the autonomous vehicle during this period.

Further, in each of the above embodiments, after determining whether a steering failure has occurred in the autonomous vehicle during the corresponding period, the method further includes: when a steering failure occurs in the autonomous vehicle during a period, generating a steering failure detection result and reporting the result to an autonomous driving module of the autonomous vehicle, so that the autonomous driving module adjusts a driving state of the autonomous vehicle according to the steering failure detection result.

Based on the steering failure detection result, the autonomous driving module can plan a safe path for parking when a failure has occurred. Thus, with the advantages of autonomous driving, gentle and safe control can be implemented after identifying a shaft jamming situation, and the autonomous vehicle can be controlled to park flexibly through comprehensive perception and planning.

The following takes an autonomous vehicle equipped with a steer-by-wire system as an example to illustrate the specific implementation process of the steering detection method for autonomous vehicles.

The steer-by-wire system has an interface for receiving steering commands and an interface for feeding back the actual steering angle, both of which are communicatively connected to the autonomous driving module. The main principle of the steering detection method is to first measure the key characteristic parameter of steering response (i.e., steering response delay) of the autonomous vehicle under normal steering conditions through experimental means; based on this, periodically acquire the steering command angle and the actual steering angle of the autonomous vehicle; determine whether the autonomous vehicle meets the characteristics of shaft jamming (i.e., no steering is performed in the corresponding period) according to the actual steering angle; if the characteristics of shaft jamming are met, further determine whether the autonomous vehicle has shaft jamming by combining the steering command angle and the actual steering angle.

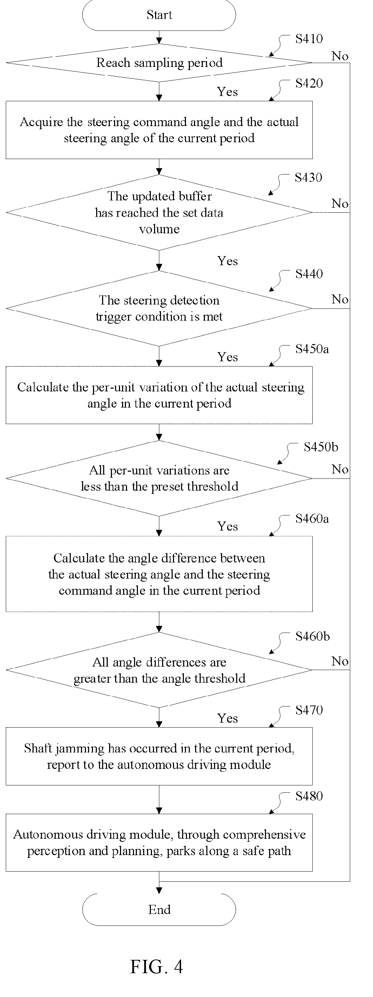

FIG. 4 shows a specific flow of the steering detection method for an autonomous vehicle in an embodiment. As shown in FIG. 4, in this embodiment, the steering detection method for the autonomous vehicle specifically includes the following steps.

S410: determine whether the sampling period is reached. If not, end the process; if yes, proceed to the subsequent steps.

S420: acquire the steering command angle and the actual steering angle of the current period.

S430: determine whether the updated buffer has reached the set data volume. If yes, proceed to the subsequent steps; if not, it indicates that the autonomous vehicle has not issued a steering command at this stage, so end the process.

S440: determine whether the steering detection trigger condition is met. If yes, proceed to the subsequent steps; if not, end the process.

S450a: calculate the per-unit variation of the actual steering angle in the current period to help determine whether the autonomous vehicle has steered in the current period.

S450b: determine whether all per-unit variations are less than the preset threshold. If yes, proceed to the subsequent steps; if not, end the process.

S460a: calculate the angle difference between the actual steering angle and the steering command angle in the current period to help determine whether a steering failure has occurred in the autonomous vehicle in the current period.

S460b: determine whether all angle differences are greater than the angle threshold. If yes, proceed to the subsequent steps; if not, end the process.

S470: determine that shaft jamming has occurred in the current period and report the detection result to the autonomous driving module.

S480: The autonomous driving module, through comprehensive perception and planning, parks along a safe path.

The above-mentioned steering detection method can efficiently and accurately detect various steering failures of the autonomous vehicle, realize online real-time monitoring of the steering state during the driving process of the autonomous vehicle, ensure stable monitoring without false detection, and the detection method is simple and easy to implement; in addition, when a steering failure is detected, the detection result can be fed back to the autonomous driving module in real time, so that the autonomous driving module can control the vehicle to park safely according to environmental perception and path planning, achieving redundant monitoring at the autonomous driving level.

An embodiment of the present disclosure further provides a steering detection apparatus for an autonomous vehicle, which can be used to implement the steering detection method for an autonomous vehicle described in any of the above embodiments. The features and principles of the steering detection method described in any of the above embodiments can be applied to the following embodiment of the steering detection apparatus. In the following embodiment of the steering detection apparatus, the features and principles related to the steering detection of the autonomous vehicle that have already been clarified will not be repeated.

The steering detection apparatus of the autonomous vehicle can be the autonomous driving module of the autonomous vehicle, an electronic unit integrated into the autonomous driving module, or an electronic unit communicating with the autonomous driving module, etc.

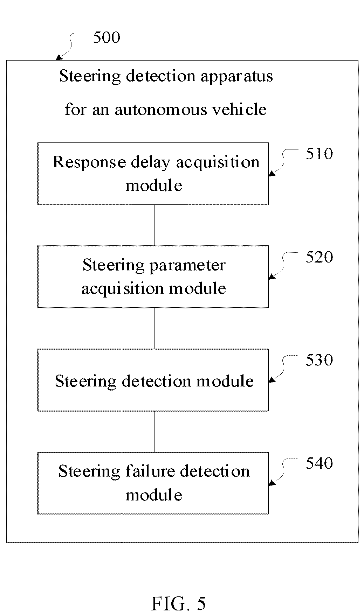

FIG. 5 shows the main modules of the steering detection apparatus for an autonomous vehicle in an embodiment. As shown in FIG. 5, the steering detection apparatus 500 for an autonomous vehicle includes:
a response delay acquisition module 510 configured to acquire steering response delay of the autonomous vehicle;
a steering parameter acquisition module 520 configured to periodically acquire steering command parameter and corresponding actual steering parameter of the autonomous vehicle according to the steering response delay;
a steering detection module 530 configured to determine whether the autonomous vehicle performs steering in a corresponding period according to the actual steering parameter of each period;
a steering failure detection module 540 configured to determine whether a steering failure has occurred in the autonomous vehicle in a corresponding period according to the steering command parameter and the actual steering parameter of the period in which steering is not performed.

Further, the steering detection apparatus 500 may further include modules for implementing other process steps in the above embodiments of the steering detection method. The specific principles of each module can be referred to the description of the above embodiments of the steering detection method, and will not be repeated here.

The steering detection apparatus of the present disclosure can efficiently and accurately detect various steering failures of the autonomous vehicle, realize online real-time monitoring of the steering state during the driving process of the autonomous vehicle, ensure stable monitoring without false detection, and the detection method is simple and easy to implement; in addition, when a steering failure is detected, the detection result can be fed back to the autonomous driving module in real time, so that the autonomous driving module can control the vehicle to park safely according to environmental perception and path planning, achieving redundant monitoring at the autonomous driving level.

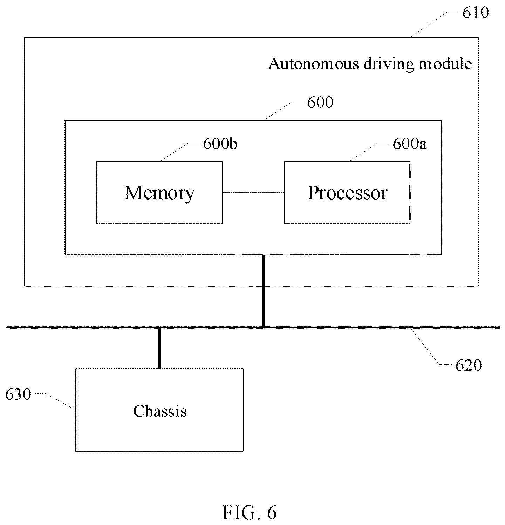

An embodiment of the present disclosure further provides an electronic device. FIG. 6 shows the overall structure of the electronic device and the connection relationship between the electronic device and the vehicle components. As shown in FIG. 6, the electronic device 600 includes a processor 600a and a memory 600b. The memory 600b stores executable commands, and when the executable commands are executed by the processor 600a, the steering detection method for an autonomous vehicle described in any of the above embodiments is implemented.

The electronic device 600 of the present disclosure can be deployed in the autonomous driving module 610 of the autonomous vehicle, or formed in a functional unit in the autonomous driving module 610, or deployed in the autonomous vehicle and communicatively connected to the autonomous driving module 610.

The electronic device 600 of the present disclosure can communicate with the chassis 630 of the autonomous vehicle through the CAN bus 620, and can efficiently and accurately detect various steering failures of the autonomous vehicle, realize online real-time monitoring of the steering state during the driving process of the autonomous vehicle, ensure stable monitoring without false detection, and the detection method is simple and easy to implement. In addition, when a steering failure is detected, the detection result can be fed back to the autonomous driving module 610 in real time, so that the autonomous driving module 610 can control the vehicle to park safely according to environmental perception and path planning, achieving redundant monitoring at the autonomous driving level.

The electronic device 600 can also communicate with one or more external devices, which can be other control/execution components of the autonomous vehicle, so as to realize linkage control of the autonomous vehicle based on the steering detection results.

An embodiment of the present disclosure further provides a computer-readable storage medium for storing a program, which, when executed, implements the steering detection method for an autonomous vehicle described in any of the above embodiments. **In** some possible implementations, various aspects of the present disclosure can also be implemented in the form of a program product, which includes program code. When the program product runs on a terminal device, the program code is used to enable the terminal device to execute the steering detection method for an autonomous vehicle described in any of the above embodiments.

The storage medium of the present disclosure can be executed by the autonomous driving module of the autonomous vehicle, or by an electronic unit deployed in the autonomous driving module, or by a processor deployed in the autonomous vehicle and communicatively connected to the autonomous driving module.

When the storage medium of the present disclosure is executed, it can detect various steering failures of the autonomous vehicle, realize online real-time monitoring of the steering state during the driving process of the autonomous vehicle, ensure stable monitoring without false detection, and the detection method is simple and easy to implement. In addition, when a steering failure is detected, the detection result can be fed back to the autonomous driving module in real time, so that the autonomous driving module can control the vehicle to park safely according to environmental perception and path planning, achieving redundant monitoring at the autonomous driving level.

The storage medium may be a portable compact disc read-only memory (CD-ROM) including program code, and may run on a terminal device such as a personal computer. However, the storage medium of the present disclosure is not limited thereto, and it can be any tangible medium that contains or stores a program, which can be used by or in combination with a command execution system, apparatus, or device.

The storage medium may be any combination of one or more readable media. The readable medium may be a readable signal medium or a readable storage medium. The readable storage medium may be, for example, but not limited to, an electrical, magnetic, optical, electromagnetic, infrared, or semiconductor system, apparatus, or device, or any combination thereof. More specific examples of readable storage media include, but are not limited to: electrical connections with one or more wires, portable disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the above.

A readable signal medium may include a data signal propagated in baseband or as part of a carrier wave, in which readable program code is carried. Such propagated data signals may take various forms, including but not limited to electromagnetic signals, optical signals, or any suitable combination thereof. A readable signal medium may also be any readable medium other than a readable storage medium, which can send, propagate, or transmit a program for use by or in combination with a command execution system, apparatus, or device. The program code contained on the readable signal medium can be transmitted via any appropriate medium, including but not limited to wireless, wired, optical cable, RF, etc., or any suitable combination of the above.

The program code for executing the operations of the present disclosure can be written in any combination of one or more programming languages, including object-oriented programming languages such as Java, C++, etc., and also including conventional procedural programming languages such as "C" or similar programming languages. The program code can be executed entirely on the user's computing device, partially on the user's device, executed as a separate software package, partially on the user's computing device and partially on a remote computing device, or entirely on the remote computing device or server. In the case involving a remote computing device, the remote computing device can be connected to the user's computing device through any kind of network, including a local area network (LAN) or a wide area network (WAN), or can be connected to an external computing device, for example, through the Internet using an Internet service provider.

The above contents are detailed descriptions of the present disclosure in combination with specific selective embodiments. However, the specific implementation methods of the present disclosure are not limited to these descriptions. For those skilled in the field of the present disclosure, several simple deductions or substitutions without departing from the concept of the present disclosure can be made and should all be regarded as falling into the protection scope of the present disclosure.

## Claims

1. A steering detection method for an autonomous vehicle, **characterized by** including:
acquiring steering response time delay of an autonomous vehicle;
periodically acquiring steering command parameter and corresponding actual steering parameter of the autonomous vehicle according to the steering response time delay;
according to the actual steering parameter of each period, determining whether the autonomous vehicle performs steering in a corresponding period;
according to the steering command parameter and the actual steering parameter of each period in which steering is not performed, determining whether a steering failure has occurred in the autonomous vehicle during a corresponding period.

2. The steering detection method according to claim 1, wherein the actual steering parameter includes an actual steering angle;
the step of determining whether the autonomous vehicle performs steering in a corresponding period includes:
determining whether per-unit variation in the actual steering angle is less than a preset threshold based on the actual steering parameter of a current period;
if yes, determining that the steering of the autonomous vehicle is not performed during the current period.

3. The steering detection method according to claim 1, wherein the steering command parameter includes a steering command angle, and the actual steering parameter includes an actual steering angle;
the step of determining whether a steering failure has occurred in the autonomous vehicle during a corresponding period includes:
determining whether an angle difference between each pair of the steering command angle and the actual steering angle is greater than an angle threshold based on the steering command parameter and the actual steering parameter of a current period in which steering is not performed;
if yes, determining that a steering failure has occurred in the autonomous vehicle in the current period in which steering is not performed.

4. The steering detection method according to claim 3, wherein in each pair of the steering command angle and the actual steering angle, a time difference between a timestamp of the actual steering angle and a timestamp of the steering command angle corresponds to the steering response delay.

5. The steering detection method according to claim 1, wherein the step of periodically acquiring steering command parameter and corresponding actual steering parameter of the autonomous vehicle includes:
determining a duration of a detection window, wherein the duration of the detection window is greater than the steering response delay;
periodically acquiring the steering command parameter and the actual steering parameter of the autonomous vehicle based on the duration of the detection window.

6. The steering detection method according to claim 1, wherein before the step of periodically acquiring steering command parameter and corresponding actual steering parameter of the autonomous vehicle, the method further includes:
determining a sampling period for the steering command parameter and the actual steering parameter according to an update period of the steering command parameter of the autonomous vehicle;
wherein a sampling period is greater than the update period and less than the steering response delay.

7. The steering detection method according to claim 1, wherein after the step of periodically acquiring steering command parameter and corresponding actual steering parameter of the autonomous vehicle, the method further includes: storing the steering command parameter and the actual steering parameter of one period acquired currently in a buffer;
the step of determining whether the autonomous vehicle performs steering during a corresponding period is performed based on the steering command parameter and the actual steering parameter of the corresponding period acquired from the buffer.

8. The steering detection method according to claim 7, wherein a capacity of the buffer corresponds to a data volume of the steering command parameter and the actual steering parameter of one period.

9. The steering detection method according to claim 1, wherein before the step of determining whether the autonomous vehicle performs steering during the corresponding period, the method further includes:
determining that the autonomous vehicle has entered an autonomous driving mode and that target parameter of the autonomous vehicle satisfy a steering detection trigger condition;
wherein the steering detection trigger condition is determined according to a configuration of a steering system of the autonomous vehicle.

10. The steering detection method according to claim 1, wherein the step of acquiring steering response time delay of an autonomous vehicle includes:
performing a response test on the autonomous vehicle under an autonomous driving condition to acquire time-dependent variation relationship between the steering command parameter and the actual steering parameter of the autonomous vehicle;
determining the steering response delay of the autonomous vehicle according to the variation relationship.

11. The steering detection method according to any one of claims 1-10, wherein after the step of determining whether a steering failure has occurred in the autonomous vehicle during a corresponding period, the method further includes:
when a steering failure occurs in the autonomous vehicle during a period, generating a steering failure detection result and reporting the result to an autonomous driving module of the autonomous vehicle, so that the autonomous driving module adjusts a driving state of the autonomous vehicle according to the steering failure detection result.

12. A steering detection apparatus for an autonomous vehicle applied to the steering detection method for an autonomous vehicle according to any one of claims 1-11, **characterized in that** the apparatus includes:
a response delay acquisition module configured to acquire steering response delay of the autonomous vehicle;
a steering parameter acquisition module configured to periodically acquire steering command parameter and corresponding actual steering parameter of the autonomous vehicle according to the steering response delay;
a steering detection module configured to determine whether the autonomous vehicle performs steering in a corresponding period according to the actual steering parameter of each period;
a steering failure detection module configured to determine whether a steering failure has occurred in the autonomous vehicle during a corresponding period according to the steering command parameter and the actual steering parameter of each period in which steering is not performed.

13. An electronic device, including:
a processor;
a memory configured to store a computer program, wherein the steering detection method for an autonomous vehicle according to any one of claims 1-11 is performed when the computer program is executed by the processor.

14. A computer storage medium configured to store a computer program, wherein the steering detection method for an autonomous vehicle according to any one of claims 1-11 is performed when the computer program is executed by a processor.
